(19) 

**Europäisches Patentamt**
**European Patent Office**
**Office européen des brevets**

(11) **EP 4 578 897 A1**

(12) **EUROPEAN PATENT APPLICATION**
published in accordance with Art. 153(4) EPC

(43) Date of publication:
**02.07.2025 Bulletin 2025/27**

(21) Application number: **23857785.2**

(22) Date of filing: **25.08.2023**

(51) International Patent Classification (IPC):
*C08J 5/18* (2006.01)    *C08L 67/02* (2006.01)

(52) Cooperative Patent Classification (CPC):
**C08J 5/18; C08L 67/02**

(86) International application number:
**PCT/KR2023/012653**

(87) International publication number:
**WO 2024/043753 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.08.2022 KR 20220107761**

(71) Applicant: **SK microworks Co., Ltd.
Chungcheongbuk-do 27818 (KR)**

(72) Inventors:
• **LEE, Sang Hyun
Seoul 07793 (KR)**
• **HAN, Jae Il
Seoul 07793 (KR)**
• **CHOI, Hong Jun
Seoul 07793 (KR)**
• **PARK, Eun Young
Seoul 07793 (KR)**
• **BAEK, Sang Hyun
Seoul 07793 (KR)**

(74) Representative: **Dehns
10 Old Bailey
London EC4M 7NG (GB)**

(54) **RECYCLED PET FILM MANUFACTURED USING RECYCLED CHIPS**

(57)    The present invention provides: a recycled chip which has intrinsic viscosity and a DEG unit content within specific ranges and realizes remarkable film-forming properties; and a recycled PET film manufactured therefrom and not only having excellent breaking strength and elongation at break, but also having a significantly low heat shrinkage rate, to solve the low breaking strength and elongation at break and high heat shrinkage rate of conventional recycled PET films.

**EP 4 578 897 A1**

## Description

## Technical Field

The present disclosure relates to recycled chips produced including waste PET and having an adjusted intrinsic viscosity and DEG unit content, and a PET film prepared including the recycled chips.

## Background Art

Disposal of plastic waste, due to their poor biodegradability and large porosity, causes various problems such as water pollution, ecosystem destruction, and soil pollutions due to landfills. Moreover, plastics, even when incinerated, emit carbon dioxide and toxic gases causing air pollutions, thus making their disposal even more difficult.

In this context, in order to process plastic waste, plastics made from biomass or biodegradable plastics are being currently manufactured; however, these plastics are difficult to commercialize due to a high cost and a complex manufacturing process, and also fail to achieve the fundamental purpose of plastic waste processing.

Among technologies for processing plastic waste, a technology capable of recovering large amounts of plastic waste may be a plastic waste recycling technology. The technology of recycling PET, which accounts for a large proportion of plastic waste, has seen significant technical developments and growing in the market size since the year 2000. Further, in recent years, due to China's import regulations on plastic waste, the recycled PET industry has been rapidly growing.

The waste PET (recycled PET) recycling process utilizes recycled PET that has gone through processes such as sorting, removal of foreign materials, cleaning, and metal separation, to manufacture clothing, packaging containers, home appliances, automobiles, films, and the like. However, because physical properties of such recycled PET are not as good as PET products produced from virgin PET, the goal of waste PET recycling is mainly to minimize the environmental load rather than complete recycling of the material.

For example, because waste PET is manufactured by crushing used products that have undergone primary processing, and distributed as recycled PET flakes, film processability is significantly reduced. In addition, PET films manufactured therefrom generally have poor mechanical properties and thermal stability, compared to virgin PET films.

In this context, there is a need for a new technology that allows a recycled PET film to have excellent film processability even when containing a large amount of waste PET. Further, there is a need for a technology for producing a PET film which has physical properties comparable or superior to a virgin PET film produced from virgin PET, and which therefore has commercially useful properties.

[Prior art documents]

[Patent documents]

Korean Patent Application No. 10-2013-0035897 A
Korean Patent Application No. 10-2022-0003140 A

## Disclosure of Invention

## Technical Problem

One aspect of the present disclosure provides a recycled PET film which has an intrinsic viscosity (IV) of 0.55 dL/g or more and thus realizes superior breaking strength, to address the issues of poor mechanical properties of the conventional recycled PET films.

One aspect of the present disclosure provides a recycled PET film which has an IV of 0.62 dL/g or less, to address the issues of irregular traveling of unstretched recycled PET films in the conventional process of producing films from waste PET.

One aspect of the present disclosure provides a recycled PET film which includes a molding modifier, thereby addressing the issues of irregular traveling of unstretched recycled PET films in the conventional process of producing films from waste PET.

One aspect of the present disclosure provides a recycled PET film which has a DEG unit content of 3 mol% or less, and can thus realize a significantly lower thermal shrinkage than the conventional recycled PET films produced from waste PET, to address the issues of poor thermal characteristics of the conventional recycled PET films.

In one or more embodiments, the recycled PET film may have an elongation-at-break, in both TD and MD, of 20

kgf/mm$^2$ or more, 25 kgf/mm$^2$ or more, preferably, 27 kgf/mm$^2$ or more.

In one or more embodiments, the recycled PET film may have a thermal shrinkage at 200 °C of 5 % or less in MD and 1 % or less in TD.

**Solution to Problem**

A recycled PET film of the present disclosure may be produced using recycled chips produced including waste PET, and virgin chips produced including virgin PET, wherein the recycled PET film may have an intrinsic viscosity (IV) of 0.55 dL/g to 0.62 dL/g, and a DEG unit content of 3 mol% or less.

In one or more embodiments, the recycled chips may have an intrinsic viscosity (IV) of 0.60 dL/g to 0.65 dL/g.

In one or more embodiments, the waste PET may have a weight average molecular weight of 40,000 g/mol to 70,000 g/mol.

In one or more embodiments, the recycled PET film may have a DEG unit content of 0.5 mol% to 2 mol%.

In one or more embodiments, the recycled PET film may have a breaking strength, as measured by ASTM D882, of 20 kgf/mm$^2$ to 30 kgf/mm$^2$ in both MD and TD.

In one or more embodiments, the recycled PET film may have a thermal shrinkage at 200 °C of 5 % or less in MD and 1 % or less in TD.

In one or more embodiments, the recycled PET film may have a melting point of 245 °C to 255 °C.

In one or more embodiments, the recycled PET film may have an acid value (COOH value) of 25 eq/ton to 45 eq/ton.

In one or more embodiments, the recycled PET film may contain 30 wt% to 95 wt% of waste PET, and 5 wt% to 70 wt% of virgin PET.

In one or more embodiments, the recycled PET film may contain 10 ppm to 200 ppm of metal ions derived from virgin chips manufactured including a molding modifier.

In one or more embodiments, the recycled PET film may satisfy Equations 1 to 3 below.

$$[\text{Equation 1}]$$
$$10 \leq [\text{Mg}] \leq 100$$

$$[\text{Equation 2}]$$
$$0.1 \leq [\text{Na}] \leq 10$$

$$[\text{Equation 3}]$$
$$1 \leq [\text{P}] \leq 10$$

(In Equations 1 to 3, [Mg] represents the concentration (ppm) of magnesium ions included in the recycled PET film, [Na] represents the concentration (ppm) of sodium ions included in the recycled PET film, and [P] represents the concentration (ppm) of phosphorus ions included in the recycled PET film.)

In one or more embodiments, the recycled PET film may contain 100 ppm to 1,000 ppm of an anti-blocking agent.

A method of preparing recycled PET according to the present disclosure may include producing recycled chips including waste PET, producing virgin chips including virgin PET, and producing a recycled PET film including recycled chips and virgin chips.

In one or more embodiments, in the producing of a recycled PET film, the weight ratio of recycled chips to virgin chips included may be 30:70 to 95:5. For example, the weight ratio of recycled chips to virgin chips may be 50:50 to 90:10, 55:45 to 90:10, or 60:40 to 80:20.

In one or more embodiments, the virgin chips may be produced including 150 ppm to 14,000 ppm of a molding modifier.

In one or more embodiments, the virgin chips may be produced including 150 ppm to 20,000 ppm of an anti-blocking agent.

**Advantageous Effects of Invention**

A recycled PET film according to embodiments, by having an intrinsic viscosity that satisfies 0.55 dL/g to 0.62 dL/g, may have excellent breaking strength and elongation-at-break and may be produced including a large amount of waste PET by enabling more uniform traveling of an unstretched recycled PET film.

The recycled PET film according to embodiments, by having a DEG unit content that satisfies 3 mol% or less, may have superior heat resistance and significantly reduced thermal shrinkage compared to the conventional recycled PET films.

The recycled PET film according to embodiments, by having a DEG unit content that satisfies 0.5 mol% or more, may achieve a glass-transition temperature of 81 °C or less and a melting point of 255 °C or less, which may lead to further improved recycled PET film-forming properties and enable the production of a recycled PET film with low thermal energy in a method of preparing a recycled PET film.

Therefore, the recycled PET film according to embodiments may achieve an environmentally-friendly advantage by recycling waste PET; may be used as an alternative to virgin PET in the relevant field by providing superior mechanical strength and heat resistance through controlling intrinsic viscosity; and may be more advantageously utilized than the conventional recycled PET in terms of customer satisfaction.

## Best Mode for Carrying out the Invention

Hereinbelow, a recycled PET film and a method of preparing the same according to the present disclosure will be described in greater detail. Unless otherwise defined, all technical and scientific terms used herein have the same meaning as commonly understood by one of ordinary skill in the art to which the present disclosure belongs. In the description below, well-known functions and configurations will not be described since they may unnecessarily obscure the understanding of the present disclosure.

The singular form used in the present specification may be intended to also include a plural form, unless otherwise indicated in the context.

In addition, the numerical range used in the present specification includes all values within the range including the lower limit and the upper limit, increments logically derived in a form and span in a defined range, all double limited values, and all possible combinations of the upper limit and the lower limit in the numerical range defined in different forms. Unless otherwise defined in the specification of the present disclosure, values which may be outside a numerical range due to experimental error or rounding of a value are also included in the defined numerical range.

As used herein, the terms "comprises" and/or "comprising," or "includes" and/or "including" are open-ended and synonymous with "provided with" "containing," "having" or "characterized by," and do not exclude additional, unrecited elements, materials, or method steps.

As used herein, the term "acidity" may refer to an equivalent weight of carboxyl end groups (*-COOH) of PET contained in recycled PET, recycled chips or PET film.

As used herein, the term "unstretched recycled PET film" may refer to a melted recycled PET sheet derived from a T-die or a recycled PET sheet in an unstretched state in PET film production.

For example, the conventional waste PET, such as fibers, container, labels, pipes, bottles, and films, undergoes processes such as compression, separation of inorganic particles, washing, color sorting, drying, crushing, washing with non-solvent solutions, drying, and separation of metal particulates, to be manufactured into recycled PET molded articles.

However, such waste PET products have undergone one or more molding processes such that they have different PDI, crystallinity, physical properties, glass-transition temperatures, melting points, and the like, and also show poor physical properties compared to molded articles produced from virgin PET due to residual grades.

For example, because the process of preparing a recycled PET film from waste PET involves various processes, e.g., heat treatment, cooling, stretching, and drying, carried out within a short period of time, conventionally, even when containing virgin PET in a large amount, e.g., 50 wt% or more, the recycled PET films produced still show poor physical properties, for example, exhibit poor mechanical properties and thermal properties that fail commercial applications.

As a result of the investigation in an attempt to address some of the aforementioned issues of the conventional recycled PET films, it was discovered that, depending on an intrinsic viscosity (IV) of recycled chips produced including waste PET, significantly improved recycled PET-film forming properties can be achieved, and furthermore, that surprisingly, the recycled PET film thus produced may have excellent mechanical properties.

In addition, it was further discovered that, depending on the DEG unit content of PET resin (waste PET and virgin PET) included in a recycled PET film, the recycled PET film can achieve significantly improved thermal shrinkage and can maintain mechanical properties by controlling the DEG unit content.

Accordingly, the recycled PET film according to embodiments, by having significantly improved mechanical strength and low thermal shrinkage, may be highly environmentally-friendly by recycling waste PET, and may be used as an alternative to virgin PET films used in the fields involving display substrates, protection films for electronic substrates, and the like.

Hereinafter, a recycled PET film of the present disclosure will be described in detail.

The recycled PET film of the present disclosure may be produced including recycled chips including waste PET, and virgin chips including virgin PET.

In one or more embodiments, the recycled PET film may have an intrinsic viscosity (IV) of 0.55 dL/g to 0.62 dL/g, and a DEG unit content of 3 mol% or less.

In another embodiment, the recycled PET film may have an intrinsic viscosity of 0.57 dL/g to 0.59 dL/g, and the recycled PET film with an intrinsic viscosity satisfying this range may be preferred for its superior elongation-at-break and its breaking strength being in a practical range.

The intrinsic viscosity of the recycled PET film may result from the weight average molecular weights or crystallinities of the waste PET and virgin PET included in the recycled PET film. Further, as the recycled PET film having an intrinsic viscosity in the aforementioned ranges may have a lower crystallinity than that of a virgin PET film, a film produced therefrom may have a significant elongation.

The recycled PET film with an intrinsic viscosity of less than 0.55 dL/g may have increased elongation-at-break due to significantly reduced crystallinity, but may have a significantly reduced breaking strength.

Further, because a recycled PET film with an intrinsic viscosity of more than 0.62 dL/g, due to its low film forming property, may have diminished mechanical properties, it may be more preferable that the PET film have an intrinsic viscosity in the aforementioned ranges.

According to one or more embodiments, the recycled chips may have an intrinsic viscosity (IV) of 0.60 dL/g to 0.65 dL/g.

Recycled chips having an intrinsic viscosity in the aforementioned range, because it realizes a lower intrinsic viscosity than that of virgin PET resin, may be preferred because such recycled chips allow an unstretched recycled PET film to travel at a constant speed during the recycled PET film processes, and a PET film produced therefrom can have an intrinsic viscosity satisfying 0.62 dL/g or less.

The intrinsic viscosity of the recycled chips may result from the molecular weights, polymer structures, and repeating unit contents of waste PET and virgin PET included therein. For example, the value of the intrinsic viscosity may change depending on the weight average molecular weight of the waste PET included in the recycled chips.

According to one or more embodiments, the waste PET may have a weight average molecular weight of 40,000 g/mol to 70,000 g/mol, 45,000 g/mol to 65,000 g/mol, or preferably 50,000 g/mol to 60,000 g/mol.

Because recycled chips including waste PET having a weight average molecular weight in the aforementioned ranges may have an IV in the aforementioned ranges, such recycled chips may have superior PET film processability, and a PET film produced therefrom may have superior elongation-at-break and breaking strength and may be thus preferred.

In one or more embodiments, the waste PET may have a poly dispersity index (PDI) of 1.0 to 3.0, preferably, 1.5 to 2.5. Further, the waste PET may be a product of pulverizing various waste PET articles having different weight average molecular weights, and therefore have an increased PDI value; however, as the waste PET is produced as recycled chips by blending such waste PET articles, it may be possible to reduce or suppress deterioration in physical properties of a recycled PET film caused by a high PDI of waste PET.

In one or more embodiments, the waste PET and virgin PET included in the recycled PET film may include diethylglycol as a copolymerization unit, in addition to ethylene and terephthalate.

In one or more embodiments, the DEG unit content of waste PET included in the recycled PET film may be 0.5 mol% to 3.0 mol%. For example, the DEG unit content of waste PET included in the recycled PET film may be 0.5 mol% to 2.9 mol%, 0.5 mol% to 2.8 mol%, 0.5 mol% to 2.7 mol%, 0.5 mol% to 2.6 mol%, 0.5 mol% to 2.5 mol%, 0.6 mol% to 2.4 mol%, 0.6 mol% to 2.3 mol%, 0.6 mol% to 2.2 mol%, 0.6 mol% to 2.1 mol%, 0.6 mol% to 2.0 mol%, 0.7 mol% to 1.9 mol%, 0.7 mol% to 1.8 mol%, 0.7 mol% to 1.7 mol%, 0.8 mol% to 1.6 mol%, 0.8 mol% to 1.5 mol%, 0.8 mol% to 1.4 mol%, 0.9 mol% to 1.3 mol%, 1.0 mol% to 1.3 mol%, or 1.1 mol% to 1.3 mol%.

Depending on the contents of waste PET, virgin PET, and DEG unit included therein, properties of the recycled PET film may be varied in crystallinity, glass-transition temperature, cooling temperature, thermal shrinkage, elongation, tensile strength, and the like. Further, an increase of the DEG unit content leads to a decrease in crystallinity, and therefore may result in decrease in glass-transition temperature and melting point, and decrease in breaking strength.

According to one or more embodiments, the recycled PET film may have a DEG unit content of 0.5 mol% to 2 mol%, preferably, 1 mol% to 2 mol%.

A recycled PET film with a DEG unit content satisfying the aforementioned ranges may achieve reduced thermal shrinkage than the conventional recycled PET film produced including waste PET, and may also achieve a glass-transition temperature and melting point that leads to superior recycled PET film-forming properties, and may be thus preferred.

For example, a recycled PET film that contains PET (waste PET and virgin PET) with a DEG unit content of more than 3 mol% may have increased elongation-at-break, but may suffer a significant decrease in breaking strength, and therefore cannot be used as an alternative to a virgin PET film.

In addition, a recycled PET film that contains PET (waste PET and virgin PET) with a DEG unit content of 0.5 mol% or less may have decreased recycled PET film-forming properties due to a significant decrease in elongation and an increase in melting point; and therefore, it may be more preferable that the DEG unit content of the recycled PET film satisfy 0.5 mol% to 3 mol%.

According to one or more embodiments, the recycled PET film may have an acid value (COOH value) of 25 eq/ton to 45 eq/ton, for example, 32 eq/ton to 39 eq/ton.

A recycled PET film with an acid value in the aforementioned ranges, surprisingly, may realize a further significant film-forming property by an interaction with an intrinsic viscosity in the aforementioned ranges, and have superior transparency, low thermal shrinkage, and excellent breaking strength and elongation-at-break and may be thus preferred.

According to one or more embodiments, the recycled PET film may include 40 wt% to 95 wt% of waste PET and 5 wt% to 60 wt% of virgin PET, and preferably, may include 60 wt% to 95 wt% of waste PET and 5 wt% to 40 wt% of virgin PET.

The recycled PET film, by including the waste PET and virgin PET in the aforementioned wt% ranges as a PET resin component, can contain a greater amount of waste PET than the conventional recycled PET films, and thus be more environmentally-friendly. Further, the intrinsic viscosity and DEG unit content in the aforementioned ranges may be controlled from the recycled chips containing the waste PET.

As described above, the recycled PET film may exhibit superior elongation-at-break and superior breaking strength at the same time and also have low thermal shrinkage, such that the recycled PET film realizes sufficient physical properties and can serve as an alternative to a virgin PET film.

The recycled PET film according to one or more embodiments may have a thickness of 10 μm to 200 μm, for example, 10 μm to 125 μm, and for example, 10 μm to 100 μm; however, the thickness of the recycled PET film may be adjusted depending on the field in which it is used, and may be any thickness as long as it does not diminish physical properties.

A recycled PET film having a thickness in the aforementioned ranges may differ from one another depending on the degree to which an unstretched recycled PET film withdrawn from a T-die is stretched in MD and TD in the method of preparing a PET film described below. Further, a recycled PET film having a thickness in the aforementioned ranges may be preferred for being able to have a minimal surface scratch, pin-hole or breaking holes.

Additionally, the PET film having a thickness in the aforementioned ranges may be a single film or a laminated film; the thickness may increase due to lamination but is not particularly limited.

For example, the laminated film may be a film having two or more recycled PET film layers, and may have a laminated structure that includes a single PET film layer with a different type of layer (e.g., a layer free of recycled polyesters, or a layer containing a different type of resin).

According to embodiments, the recycled PET film may include 10 ppm to 200 ppm of metal ions derived from virgin chips produced including a molding modifier, and may include, for example, 10 ppm to 100 ppm, for example, 30 ppm to 80 ppm.

The virgin chips produced including the molding modifier may include metal ions in the molding modifier, and for example, the metal ions may be $Mg^{2+}$, $Na^+$, $Ca^{2+}$, $PO_4^{3-}$ or $Li^+$.

The molding modifier may be, for example, any one or a mixture of two or more selected from magnesium hydroxide, magnesium acetate, sodium acetate, sodium hydroxide, calcium acetate, lithium acetate, calcium phosphate, magnesium oxide, magnesium hydroxide, magnesium alkoxide, manganese acetate, zinc acetate, trimethyl phosphate, and triethyl phosphate.

According to one or more embodiments, the molding modifier may include a magnesium compound, a sodium compound, and a phosphorus compound, and for example, may include magnesium acetate, sodium acetate, and trimethyl(ethyl) phosphate.

According to one or more embodiments, the recycled PET film may satisfy Equations 1 to 3 below.

$$[\text{Equation 1}]$$
$$10 \leq [\text{Mg}] \leq 100$$

$$[\text{Equation 2}]$$
$$0.1 \leq [\text{Na}] \leq 10$$

$$[\text{Equation 3}]$$
$$1 \leq [\text{P}] \leq 50$$

(In Equations 1 to 3, [Mg] represents the concentration (ppm) of magnesium ions included in the recycled PET film, [Na] represents the concentration (ppm) of sodium ions included in the recycled PET film, and [P] represents the concentration (ppm) of phosphorus ions included in the recycled PET film.)

In another embodiment, in Equations 1 to 3, [Mg] may be 10 to 80, [Na] may be 0.1 to 5, and [P] may be 1 to 10.

The recycled PET film containing magnesium ions, sodium ions, and phosphorus ions in a range of concentration (ppm) as in Equations 1 to 3 may achieve significant film-forming properties even with a minimal content of metal ions, and may prevent metal ions from agglomerating together. Thus, the PET film produced including the same may achieve significant transparency, a low color difference value, and low surface characteristics, at the same time.

Further, the recycled PET film, by being produced from recycled chips having adjusted intrinsic viscosity, DEG unit content, and acidity, may achieve excellent processibility, and by further including the molding modifier, may achieve further improved film-forming properties, and surprisingly, may further improve the effect of a molding modifier due to having excellent compatibility with recycled chips having an intrinsic viscosity in the aforementioned ranges.

The recycled PET film according to one or more embodiments may include an anti-blocking agent in an amount of 100 ppm to 1,000 ppm, particularly, 300 ppm to 1,000 ppm, and more particularly, 500 ppm to 900 ppm.

The recycled PET film including an anti-blocking agent in the aforementioned ranges may have further improved recycled PET film-forming properties during the preparation process. Further, the recycled PET film thus produced may be resistant to adhereing to each other during a winding process and significantly decrease defects by scratches and have uniform processibility, and may be thus preferred.

In one or more embodiments, the anti-blocking agent may be inorganic particles, organic particles, or a mixture thereof, and for example, may be one or more selected from $NaF$, $MgF_2$, $CaF_2$, $BaF_2$, $SiO_2$, $BaSO_4$, $CeF_3$, $Al_2O_3$, $ZrO_2$, $TiO_2$, $ZnS$, $ZnSe$, $Ta_2O_5$ and the like. For example, an anti-blocking agent including SiO2 may achieve excellent film-forming properties, but without being limited thereto, any anti-blocking agent recognizable to those skilled in teh art may be utilized.

The recycled PET film may further include one or more additives selected from lubricants, stabilizers, plasticizers, UV stabilizers, heat stabilizers, fillers, pigment foaming agents, viscosity regulators, processing aids, flame retardants, enhancers, and dispersants. Without being limited to the aforementioned examples, any additives recognizable to those skilled in the art may be used.

Hereinbelow, physical properties of a recycled PET film according to embodiments will be described in greater detail.

The recycled PET film according to embodiments, by having an intrinsic viscosity and a DEG unit content in the aforementioned ranges, may have excellent elongation-at-break and breaking strength and in terms of thermal characteristics, may have significantly decreased thermal shrinkage.

Furthermore, the recycled PET film, by further including a molding modifier, may achieve further improved film-forming properties and thus provide a recycled PET film that has excellent transparency, reduced pin-hole defects, and reduced height differences in surface irregularities.

The recycled PET film according to embodiments may have a breaking strength, as measured by ASTM D882, of 10 kgf/mm² to 30 kgf/mm², preferably 20 kgf/mm² to 30 kgf/mm², in both MD and TD.

The recycled PET film having a breaking strength in the aforementioned ranges may have a breaking strength superior to that of the conventional recycled PET film and a breaking strength similar to that of a virgin PET film, and thus may be used as an alternative to a virgin PET film in the field in which a high breaking strength is required.

The recycled PET film according to another embodiment may have an elongation-at-break, as measured by ASTM D882, of 130 % to 170 % in MD and 100 % to 140 % in TD, preferably, 150 % to 170 % in MD and 110 % to 140 % in TD.

The recycled PET film having an elongation-at-break in the aforementioned ranges may be the effect of having an intrinsic viscosity that satisfies the aforementioned range of 0.55 dL/g to 0.62 dL/g. Further, the recycled PET film having an elongation-at-break in the aforementioned ranges may, due to having an elongation-at-break superior to that of virgin PET and an improved elongation-at-break than that of the conventional recycled PET, may be more advantageously utilized as flexible material.

According to one or more embodiments, the recycled PET film may have a thermal shrinkage at 200 °C of 5% or less in MD and 1% or less in TD, and preferably 3% or less, more preferably 2 % or less in MD, and 0.1 % to 0.5 % in TD.

The recycled PET film having a thermal shrinkage in the aforementioned ranges may have excellent dimensional stability even in high-temperature environments, and thus may be utilized in various fields including display substrates, protection films for electronic products, food cotnainers, and the like.

Hereinafter, a method of preparing a recycled PET film of the present disclosure will be described in detail.

Disclosed herein is a method of preparing a PET film, including: producing recycled chips including waste PET; producing virgin chips including virgin PET; and producing a recycled PET film including the recycled chips and the virgin chips.

According to one or more embodiments, the recycled chips may have an intrinsic viscosity of 0.60 dL/g to 0.65 dL/g.

The recycled chips having an intrinsic viscosity in the aforementioned ranges may have excellent film-forming properties as described above, and a recycled PET film produced from such recycled chips may have an intrinsic viscosity (IV) of 0.55 dL/g to 0.61 dL/g and thus achieve both excellent breaking strength and excellent elongation-at-break.

The waste PET may be any polymer based from waste polyester and may be, for example, one, or two or more selected from polyethylene terephthalate (PET), polybutylene terephthalate (PBT), polytrimethylene terephthalate (PTT), and polyethylene naphthalate (PEN).

Further, the recycled PET may be a used polyester-based copolymer, and may be produced, for example, by polymerizing one or more selected from terephthalate and $C_1$-$C_{12}$ alkyl diols. However, without being limited to the aforementioned examples, any polyester-based copolymer recognizable to those skilled in the art may be utilized.

In one or more embodiments, in the producing of a recycled PET film, the weight ratio of recycled chips to virgin chips included may be 30:70 to 95:5, and for example, may be 50:50 to 95:5, 70:30 to 95:5, or 80:20 to 90: 10.

The method of preparing a recycled PET film prepared including recycled chips and virgin chips in a weight ratio in the aforementioned ranges may be significantly environmentally-friendly by enabling recovery and recycling of a large quantity of waste PET. Further, the recycled PET film prepared by the method may achieve physical properties comparable to a virgin PET film and be used as an alternative to a virgin PET film in the related fields, thus achieving further significant environmental-friendliness.

In one or more embodiments, the method of preparing a recycled PET film may further include a molding modifier and an anti-blocking agent. The molding modifier may be introduced in the preparation of recycled chips to produce the recycled chips containing metal ions derived from the molding modifier and may be introduced in the preparation of virgin chips to produce virgin chips containing metal ions.

For example, because the produced recycled PET film may have further improved dispersion of metal ions, it may be preferable that a molding modifier be introduced in the preparation of virgin chips.

The molding modifier may be, for example, any one, or a mixture of two or more selected from magnesium hydroxide, magnesium acetate, sodium acetate, sodium hydroxide, calcium acetate, lithium acetate, calcium phosphate, magnesium oxide, magnesium hydroxide, magnesium alkoxide, manganese acetate, zinc acetate, trimethyl phosphate, and triethyl phosphate.

The molding modifier may be a substance that, when added even in a smaller amount, can achieve excellent recycled PET film film-forming properties, and may preferably include magnesium acetate, sodium acetate, and trimethyl (ethyl) phosphate.

In one or more embodiments, the virgin chips may include a molding modifier in an amount of 150 ppm to 14,000 ppm, preferably 150 ppm to 10,000 ppm, more preferably, 1,000 ppm to 6,000 ppm.

For example, the molding modifier may be introduced in the process of producing virgin chips, and the virgin chips thus produced, containing metal ions derived from the molding modifier, may contain the metal ions with an excellent degree of dispersion and may be thus preferred.

In the virgin chips produced including a molding modifier in the aforementioned ranges, the concentration in ppm of the included molding modifier may be varied depending on the amount in wt% of virgin chips introduced in the process of producing the recycled PET film, but may still satisfy the range of the concentration in ppm of the molding modifier introduced in the preparation of the virgin chips.

For example, the recycled PET film of the present disclosure may be produced including a molding modifier in an amount of 100 ppm to 700 ppm, for example, 100 ppm to 500 ppm, for example, 100 ppm to 300 ppm; however, the amount of the molding modifier included is not limited so long as the concentration of metal ions in the recycled PET film thus produced satisfies 10 ppm to 200 ppm.

In one or more embodiments, in the method of preparing recycled PET described above, the anti-blocking agent may be added, along with the molding modifier, in the process of producing recycled chips, virgin chips, and the recycled PET film. In another embodiment, the anti-blocking agent being included in the virgin chips may lead to including superior recycled chips, virgin chips, and molding modifier, and the recycled PET film thus produced may contain the anti-blocking agent with an excellent degree of dispersion.

Virgin chips according to one or more embodiments may include an anti-blocking agent in an amount of 150 ppm to 20,000 ppm, preferably 1,000 ppm to 20,000 ppm, more preferably 1,500 ppm to 18,000 ppm; however, the amount of the anti-blocking agent is not particularly limited and may be varied depending on the wt% of virgin chips introduced in the preparation of the recycled PET film.

In one or more embodiments, the producing of a recycled PET film may include stretching an unstretched recycled PET film 3 times to 5 times in both TD and MD.

For example, an unstretched PET film melt-extruded from a T-die (260 °C to 280 °C) may be driven, while flush against a casting roll, and cooled to 80 °C and stretched 3 times to 5 times in machine direction (MD) by a machine direction stretcher. Then, the recycled PET film stretched in MD may be stretched 4 times to 5 times in transverse direction (TD) by a transverse direction stretcher to thereby produce a recycled PET film having a thickness of 10 $\mu$m to 100 $\mu$m.

For example, the process of stretching in MD may be carried out at a temperature of 80 °C to 120 °C, preferably, 100 °C to 120 °C, with an elongation ratio of 3.8 times to 4.8 times, preferably, 4.0 times to 4.5 times; however, the temperature and the elongation ratio are not limited to the aforementioned examples. Further, the process of stretching in TD may be carried out at a temperature of 200 °C to 240 °C, preferably, 210 °C to 240 °C, more preferably, 220 °C to 235 °C, and the stretching may be carried out with the same elongation ratio as in MD.

Hereinbelow, a PET film and a method of preparing the same according to the present disclosure will be described in greater detail through examples. However, the following examples are provided only for illustrative purposes to describe the present disclosure in detail; therefore, the present disclosure is not limited to these examples and may be implemented in various forms. Unless otherwise defined, all technical and scientific terms used herein have the same meaning as commonly understood by one of ordinary skill in the art to which the present disclosure belongs. Further, the terms used herein are only intended to effectively describe specific examples and are not intended to limit the present disclosure.

Preparation of Recycled Chips

[Measurement Methods]

1. Measurement of Intrinsic Viscosity (IV)

2.0 g of a sample were weighted using an electronic scale and placed in a 100 mL-Erlenmeyer flask with a glass stopper, and 25 mL of o-chlorophenol (OCP) were added using a pipette injector. Next, the Erlenmeyer flask was equipped in a 100 °C melt bath and dissolution was carried out at 150 rpm for 1 hour. Then, the completely dissolved sample solution in the Erlenmeyer flask was taken out of the bath and allowed to cool at room temperature. Next, using a whole pipette, 7.5 mL of the sample solution cooled in a 25 °C constant-temperature bath was introduced into a Cannon-Fenske viscometer and allowed 20 minutes for temperature equilibration. Next, the sample solution contained in the Cannon-Fenske viscometer was allowed to flow once, and then from the second time onwards, allowed to flow freely and an efflux time was recorded by measuring the time required for the solution to pass from an upper mark to a lower mark of the viscometer. Using the Huggins Equation, the value of intrinsic viscosity was obtained.

2. Measurement of DEG Unit Content

0.0015 g of HD and 0.037 g of DEG were placed in a 100 mL-round bottom flask and dissolved with methanol, and gas chromatography was performed on 1 $\mu$L of the dissolved solution using a gas chromatograph (Agilent, 6890N) to obtain a chromatograph. Next, 0.15 g of HD and 0.06 g of zinc acetate were dissolved with methanol in a beaker, and 30.0 mL of the dissolved reaction solution was placed in a Teflon container; then, the Teflon container containing the reaction solution was placed in a pressure tube, and the pressure tube was sealed. Next, the sealed pressure tube was placed in a 210 °C oven and allowed to react for 30 minutes. Once the reaction is complete and cooled to room temperature, the Teflon container was taken out of the pressure tube. The dissociated solution contained in the Teflon container was separated by a 0.45-$\mu$m separation membrane, and gas chromatography was performed on 1 $\mu$L of the separated reaction solution to obtain chromatographs. Then, by comparing the obtained DEG chromatograph to the chromatograph of the reaction solution, DEG contained in the reaction solution was calculated.

3. Measurement of glass-transition temperature and melting point

0.1 mg of a sample was introduced in a differential scanning calorimeter (DSC, Perkin Elmer, DSC7, temperature elevation rate: 0.8 °C/s) to obtain values of glass-transition temperature (Tg) and melting point (Tm) of the sample.

[Preparation Examples 1 to 7]

Recycled chips were produced from waste PET having the properties shown in Table 1 below, using compounding equipment (Erema).
The produced recycled chips were then measured for intrinsic viscosity and DEG unit content by the above methods, and the results thereof are shown in Table 1 below.

[Table 1]

| | PET waste | | Recycled chips | |
|---|---|---|---|---|
| | Intrinsic viscosity (dL/g) | $T_m$ (°C) | Intrinsic viscosity (dL/g) | DEG (mol%) |
| Preparation Example 1 | 0.60 | 247.1 | 0.52 | 1.3 |
| Preparation Example 2 | 0.76 | 247.2 | 0.61 | 1.2 |
| Preparation Example 3 | 0.78 | 247.0 | 0.63 | 1.3 |

(continued)

| | PET waste | | Recycled chips | |
|---|---|---|---|---|
| | Intrinsic viscosity (dL/g) | $T_m$ (°C) | Intrinsic viscosity (dL/g) | DEG (mol%) |
| Preparation Example 4 | 0.80 | 247.5 | 0.65 | 1.3 |
| Preparation Example 5 | 0.90 | 247.1 | 0.71 | 1.3 |
| Preparation Example 6 | 0.78 | 252.3 | 0.63 | 0.8 |
| Preparation Example 7 | 0.78 | 243.0 | 0.63 | 5.2 |

As shown in Table 1, the recycled chips of Preparation Examples 1 to 5 were produced using waste PET articles having different intrinsic viscosities, and it was found that the recycled chips thus produced have intrinsic viscosities and DEG unit contents as shown in Table 1.

As waste PET was processed into recycled chips by compounding equipment, the intrinsic viscosity of the recycled chips have become lower than the intrinsic viscosity of the waste PET; however, it was found that the intrinsic viscosity of the original waste PET was still the most important factor.

In Table 1, Preparation Examples 6 and 7 were found to have the same intrinsic viscosity as Preparation Example 3; and it was also found that in the recycled chips produced including waste PET articles with different melting points, a low melting point of the waste PET leads to an increase of the DEG unit content of included recycled PET copolymers.

This may be a phenomenon attributable to decreased crystallinity caused by increased irregularities of the waste PET resulting from an increased DEG unit content of the waste PET.

Preparation of Recycled PET Film

[Measurement Methods]

4. Measurement of Elongation-at-break and Breaking Strength

Measurements were made according to ASTM D882 standards, and a sample was elongated at a spin-head rate of 500 mm/min. Maximum tensile strength was measured when the sample breaks, maximum elongation was measured, and tensile strength-at-break and elongation-at-break were obtained therefrom.

5. Measurement of Thermal Shrinkage

Measurements were made according to ASTM D2305 standards, and each sample was heated for 15 minutes in an oven at 150 °C and 200 °C. The heated sample was then measured for thermal shrinkage at 150 °C, and thermal shrinkage at 200 °C, according to a dimension change test disclosed in ASTM D2305.

[Examples 1 to 4 and Comparative Examples 1 to 5]

Virgin PET was loaded into compounding equipment (Erema), and the loaded virgin PET was then combined with a molding modifier containing metal compounds shown in Table 2, magnesium acetate (MgAc), sodium acetate (NaAc), and triethyl phosphate (TEP), according to the respective concentrations. Then, $SiO_2$ was added into the virgin PET at concentrations shown in Table 2, to produce virgin chips.

Subsequently, 80 wt% of the recycled chips of Preparation Examples and 20 wt% of virgin chips as shown in Table 2 were melted and mixed at 260 °C. Once the mixing is complete, the resulting mixture was discharged into a T-die maintaining a temperature of 275 °C (margin of error: ±15 °C), and the discharged unstretched recycled PET film was then stretched 4.5 times in MD and TD, to produce a 12 μm-thick recycled PET film.

Then, the recycled PET film thus produced was measured by the following measurement methods, and the results thereof are shown in Table 3 below.

[Table 2]

| | | | | Virgin chips | | | |
| | | Recycled chips | | Molding modifier | | | Anti-blocking agent |
| | Type | Intrinsic viscosity (dL/g) | DEG (mol%) | MgAc (ppm) | NaAc (ppm) | TEP (ppm) | SiO$_2$ (ppm) |
|---|---|---|---|---|---|---|---|
| Example 1 | Preparation Example 2 | 0.61 | 1.2 | 1000 | 150 | 200 | 3000 |
| Example 2 | Preparation Example 3 | 0.63 | 1.3 | 1000 | 150 | 200 | 3000 |
| Example 3 | Preparation Example 4 | 0.65 | 1.3 | 1000 | 150 | 200 | 3000 |
| Example 4 | Preparation Example 3 | 0.63 | 1.3 | 0 | 0 | 0 | 3000 |
| Comparative Example 1 | Preparation Example 1 | 0.52 | 1.3 | 1000 | 150 | 200 | 3000 |
| Comparative Example 2 | Preparation Example 1 | 0.52 | 1.3 | 0 | 0 | 0 | 3000 |
| Comparative Example 3 | Preparation Example 5 | 0.71 | 1.3 | 1000 | 150 | 200 | 3000 |
| Comparative Example 4 | Preparation Example 6 | 0.63 | 0.3 | 1000 | 150 | 200 | 3000 |
| Comparative Example 5 | Preparation Example 7 | 0.63 | 5.2 | 1000 | 150 | 200 | 3000 |

[Table 3]

| | Intrinsic viscosity (dL/g) | DEG (mol%) | Breaking strength (kgf/mm$^2$) | | Elongation-at-break (%) | | Thermal shrinkage | | | |
| | | | | | | | 150 °C | | 200 °C | |
| | | | MD | TD | MD | TD | MD | TD | MD | TD |
|---|---|---|---|---|---|---|---|---|---|---|
| Example 1 | 0.55 | 1.5 | 26.6 | 26.9 | 170.0 | 140.0 | 1.5 | 0.6 | 4.7 | 0.8 |
| Example 2 | 0.56 | 1.6 | 27.5 | 27.4 | 165.0 | 135.0 | 1.4 | 0.5 | 2.8 | 0.2 |
| Example 3 | 0.58 | 1.6 | 29.0 | 28.9 | 155.0 | 123.0 | 1.5 | 0.5 | 3.2 | 0.7 |
| Example 4 | 0.56 | 1.5 | 27.4 | 27.7 | 158.0 | 125.0 | 1.5 | 0.5 | 3.3 | 0.7 |
| Comparative Example 1 | 0.46 | 1.5 | 19.5 | 19.7 | 120.0 | 90.0 | 1.5 | 0.4 | 4.7 | 0.8 |
| Comparative Example 2 | 0.45 | 1.5 | 18.6 | 18.7 | 115.0 | 85.0 | 1.7 | 0.6 | 6.7 | 1.1 |
| Comparative Example 3 | 0.70 | 1.4 | 35.5 | 35.1 | 110.0 | 78.0 | 1.8 | 0.9 | 7.9 | 1.7 |
| Comparative Example 4 | 0.57 | 0.3 | 34.8 | 35.2 | 112.0 | 75.0 | 1.3 | 0.4 | 4.2 | 0.2 |
| Comparative Example 5 | 0.58 | 5.5 | 19.8 | 19.2 | 140.0 | 110.0 | 3.2 | 1.8 | 11.8 | 4.8 |

In Table 3, referring to Examples 1 to 3, it was found that an increase in intrinsic viscosity leads to an increase in breaking strength and a decrease in elongation-at-break. This result suggests that the increase in intrinsic viscosity is due to an increase in brittleness of the PET film, resulting from an increase in the crystallinity of the recycled PET film. For the same reason, referring to Comparative Examples 1 and 2 in Table 3, it was found that a decrease in intrinsic viscosity leads to a significant decrease in breaking strength. Further, as can be seen in Comparative Example 3, as the intrinsic viscosity increases, the breaking strength increases, yet the elongation-at-break significantly decreases. This result indicates that Comparative Examples 1 to 3 cannot be widely used in the field in which excellent flexibility is required.

Further, it was found that the crystallinity of the recycled PET film is associated with the DEG unit content of the waste PET and virgin PET included therein, and this finding can be confirmed in Comparative Examples 4 and 5 in Table 3 above.

It was found that the recycled PET film of Comparative Example 4, which has a DEG unit content of 0.3 mol%, shows a significant decrease in elongation-at-break compared to Example 3. Further, it was found that Comparative Example 5 shows a significant decrease in breaking strength and a significant increase in thermal shrinkage.

This suggests that the recycled PET film according to the present disclosure may have its mechanical properties, such as breaking strength and elongation-at-break, controlled by the intrinsic viscosities and DEG unit contents of the waste PET and virgin PET included therein; and if the intrinsic viscosity of the recycled PET film thus produced is in a range of 0.55 dL/g to 0.62 dL/g, the recycled PET film may have both excellent breaking strength and excellent elongation-at-break.

Further, as the DEG unit content of the PET film according to the present disclosure increases, the PET film may have a significant decrease in breaking strength and an increase in elongation-at-break.

For example, an increase in the DEG unit content of the recycled PET film may lead to a drastic increase in thermal shrinkage, which leads to a significant decrease in dimensional stability of the recycled PET film; this suggests that the DEG unit content of the recycled PET film needs to be in a range of 0.5 mol% to 3 mol% for the recycled PET film to have both excellent mechanical properties and excellent thermal characteristics.

Although the present disclosure is described with reference to specific examples and comparative examples, it should be understood that these examples should be considered in a descriptive sense only and not for purposes of limitation. Further, it will be understood by those of ordinary skill in the art that various changes in form and details may be made therein without departing from the spirit and scope of the present disclosure.

Accordingly, the present inventive concept should not be limited to the examples described herein, but is to cover all modifications, equivalents, and alternatives falling within the spirit and scope of the appended claims.

**Claims**

1. A recycled PET film, produced from recycled chips produced including waste PET and virgin chips produced including virgin PET,
   wherein the recycled PET film has an intrinsic viscosity (IV) of 0.55 dL/g to 0.62 dL/g, and a DEG unit content of 3 mol% or less.

2. The recycled PET film of claim 1, wherein the recycled chips have an intrinsic viscosity (IV) of 0.60 dL/g to 0.65 dL/g.

3. The recycled PET film of claim 1, wherein the waste PET has a weight average molecular weight of 40,000 g/mol to 70,000 g/mol.

4. The recycled PET film of claim 1, wherein the recycled PET film has a DEG unit content of 0.5 mol% to 2 mol%.

5. The recycled PET film of claim 1, wherein the recycled PET film has a breaking strength, as measured by ASTM D882, of 20 kgf/mm$^2$ to 30 kgf/mm$^2$ in MD and TD.

6. The recycled PET film of claim 1, wherein the recycled PET film has a thermal shrinkage at 200 °C, of 5 % or less in MD and 1 % or less in TD.

7. The recycled PET film of claim 1, wherein the recycled PET film has a melting point of 245 °C to 255 °C.

8. The recycled PET film of claim 1, wherein the recycled PET film has an acid value (COOH value) of 25 eq/ton to 45 eq/ton.

9. The recycled PET film of claim 1, wherein the recycled PET film comprises 30 wt% to 95 wt% of the waste PET, and 5 wt% to 70 wt% of the virgin PET.

10. The recycled PET film of claim 1, wherein the recycled PET film comprises 10 ppm to 200 ppm of metal ions derived from virgin chips produced including a molding modifier.

11. The recycled PET film of claim 10, wherein the recycled PET film satisfies Equations 1 to 3:

$$[\text{Equation 1}]$$
$$10 \leq [\text{Mg}] \leq 100$$

$$[\text{Equation 2}]$$
$$0.1 \leq [\text{Na}] \leq 10$$

$$[\text{Equation 3}]$$
$$1 \leq [\text{P}] \leq 10$$

wherein in Equations 1 to 3,
[Mg] is a concentration (ppm) of magnesium ions included in the recycled PET film,
[Na] is a concentration (ppm) of sodium ions included in the recycled PET film, and
[P] is a concentration (ppm) of phosphorus ions included in the recycled PET film.

12. The recycled PET film of claim 1, wherein the recycled PET film comprises 100 ppm to 1,000 ppm of an anti-blocking agent.

13. A method of manufacturing a recycled PET film, the method comprising:

preparing recycled chips comprising waste PET;
preparing virgin chips comprising virgin PET; and
preparing a recycled PET film comprising the recycled chips and the virgin chips.

14. The method of claim 13, wherein in the preparing of a recycled PET film, a weight ratio of the recycled chips to the virgin chips included may be 30:70 to 95:5.

15. The method of claim 13, wherein the virgin chips are prepared including 150 ppm to 14,000 ppm of a molding modifier.

16. The method of claim 13, wherein the virgin chips are prepared including 150 ppm to 20,000 ppm of an anti-blocking agent.

## INTERNATIONAL SEARCH REPORT

| International application No. |
|---|
| **PCT/KR2023/012653** |

| A. | CLASSIFICATION OF SUBJECT MATTER |
|---|---|

**C08J 5/18**(2006.01)i; **C08L 67/02**(2006.01)i

According to International Patent Classification (IPC) or to both national classification and IPC

| B. | FIELDS SEARCHED |
|---|---|

Minimum documentation searched (classification system followed by classification symbols)

C08J 5/18(2006.01); B29B 17/00(2006.01); B29B 17/04(2006.01); B29C 61/00(2006.01); B32B 7/02(2006.01); C08G 63/183(2006.01); C08K 5/00(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐PET(waste PET), 재생칩(recycled chip), 재생 PET 필름(recycled PET film), 디에틸렌글리콜(DEG), 극한점도(Intrinsic viscosity, IV)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0092527 A (TOYOBO CO., LTD.) 01 July 2022 (2022-07-01)<br>See paragraphs [0029]-[0059], [0107]-[0120] and [0151]-[0165]; claim 1; and example 1. | 13,14 |
| Y | | 1-12,15,16 |
| Y | KR 10-2001-0034808 A (E.I.DU PONT DE NEMOURS AND COMPANY) 25 April 2001 (2001-04-25)<br>See paragraphs [0026]-[0090]; and example 2. | 1-12,15,16 |
| Y | JP 2012-171276 A (TEIJIN DUPONT FILMS JAPAN LTD.) 10 September 2012 (2012-09-10)<br>See entire document. | 1-16 |
| A | JP 2022-117416 A (NAN YA PLASTIC CORP.) 10 August 2022 (2022-08-10)<br>See entire document. | 1-16 |
| A | KR 10-2022-0113599 A (SKC CO., LTD.) 16 August 2022 (2022-08-16)<br>See entire document. | 1-16 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 November 2023** | **24 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/012653**

| Patent document cited in search report | | | Publication date (day/month/year) | Patent family member(s) | | | Publication date (day/month/year) |
|---|---|---|---|---|---|---|---|
| KR | 10-2022-0092527 | A | 01 July 2022 | CN | 114728723 | A | 08 July 2022 |
| | | | | EP | 4053037 | A1 | 07 September 2022 |
| | | | | TW | 202124548 | A | 01 July 2021 |
| | | | | US | 2022-0403156 | A1 | 22 December 2022 |
| | | | | WO | 2021-085301 | A1 | 06 May 2021 |
| KR | 10-2001-0034808 | A | 25 April 2001 | AU | 3546399 | A | 08 November 1999 |
| | | | | AU | 742043 | B2 | 13 December 2001 |
| | | | | BR | 9909940 | A | 02 October 2001 |
| | | | | CA | 2328474 | A1 | 28 October 1999 |
| | | | | CN | 1105013 | C | 09 April 2003 |
| | | | | CN | 1298346 | A | 06 June 2001 |
| | | | | DE | 69934796 | T2 | 11 October 2007 |
| | | | | DK | 1085976 | T3 | 05 March 2007 |
| | | | | EP | 1085976 | A1 | 28 March 2001 |
| | | | | EP | 1085976 | B1 | 10 January 2007 |
| | | | | ES | 2280118 | T3 | 01 September 2007 |
| | | | | HK | 1036778 | A1 | 18 January 2002 |
| | | | | ID | 27032 | A | 22 February 2001 |
| | | | | JP | 2002-512269 | A | 23 April 2002 |
| | | | | JP | 3395970 | B2 | 14 April 2003 |
| | | | | MY | 121830 | A | 28 February 2006 |
| | | | | TR | 200003067 | T2 | 22 January 2001 |
| | | | | US | 6025061 | A | 15 February 2000 |
| | | | | WO | 99-54129 | A1 | 28 October 1999 |
| JP | 2012-171276 | A | 10 September 2012 | None | | | |
| JP | 2022-117416 | A | 10 August 2022 | CN | 114801103 | A | 29 July 2022 |
| | | | | EP | 4036165 | A1 | 03 August 2022 |
| | | | | TW | 202229424 | A | 01 August 2022 |
| | | | | TW | I746359 | B | 11 November 2021 |
| | | | | US | 2022-0243032 | A1 | 04 August 2022 |
| KR | 10-2022-0113599 | A | 16 August 2022 | KR | 10-2022-0113597 | A | 16 August 2022 |
| | | | | KR | 10-2022-0113598 | A | 16 August 2022 |
| | | | | KR | 10-2514285 | B1 | 28 March 2023 |
| | | | | WO | 2022-169129 | A1 | 11 August 2022 |

Form PCT/ISA/210 (patent family annex) (July 2022)

REFERENCES CITED IN THE DESCRIPTION

**Patent documents cited in the description**

- KR 1020130035897 A
- KR 1020220003140 A